# EUROPEAN PATENT SPECIFICATION

(11) **EP 1 675 238 B1**
(45) Date of publication and mention of the grant of the patent: **18.04.2012**
(21) Application number: 05077963.6
(22) Date of filing: 21.12.2005
(51) Int. Cl.: H02G 3/12

(54) **Electrical box with clamping means**
Elektrodose mit Klemmhalterung
Boîte électrique avec moyens de fixation

(30) Priority: 23.12.2004 NL 1027864
(43) Date of publication of application: 28.06.2006
(73) Proprietor: ABB B.V., 3068 AV Rotterdam (NL)
(72) Inventor: Renckens, Thomas Philippus, 3742 ND Baarn (NL)
(74) Representative: Ferguson, Alexander

(56) References cited:
- EP-A- 0 780 945
- EP-A- 1 037 331
- NL-A- 9 100 766

## Description

The invention relates to a box for electric wirings, to be placed in the wall of a building, according to the preamble of claim 1. Such box is known from EP-A-0.780.945.

When wiring, such boxes, usually flush-type boxes, are placed in a hole made beforehand in the wall in question, wherein they are connected by means of a spout to the wiring pipe that has already been accommodated in the wall. After placement, as a result of bending stress in the pipe, the box may be urged slightly through the plane of opening of the hole in the wall, which will be a problem when finishing the wall later on. It may furthermore occur that the box rotates in the hole. In order to have the box retain its position in the hole, known, circular boxes have been provided with strips that project radially from the circumferential wall and are slightly resilient in radial direction but are otherwise rigid, and/or with little rigid partitions facing away obliquely from the bottom. Examples thereof are given in applicant's Dutch patent 190.944.

Due to the rigid strips and little partitions, the known boxes can be properly and reliably placed in holes in walls made of materials that cannot be cut into, like sandlime brick or concrete. In that case said holes should be accurately drilled indeed, because otherwise the clamping action will be lost. As a result thereof the boxes are not properly held in their place in the hole and they may become askew.

In applicant's Dutch patent 1019049 an improved placement is suggested by providing the circumferential wall with bent lips, which run conically towards the bottom and when placing the box in a hole can be elastically pressed in. Such a provision however, requires a lot of material and is moreover hard to manufacture.

It is an object of the invention to provide a box for electric wirings that is easy to manufacture and is of a simple shape.

It is an object of the invention to provide a box for electric wirings that can be reliably placed in walls of hard and soft material, wherein the drilled hole size can be identical.

The invention provides a box for electric wirings, according to claim 1.

When placing the box in a hole of a wall, the engagement edges when engaging the surface of the -hard- wall of the hole, will be able to deform with the protrusions yet be able to remain in engagement with the surface of the wall of the hole, as a result of which a reliable anchoring of the box in the hole remains possible.

As the placement protrusions form placement flaps extending with a directional component transverse to the bottom wall, wherein the placement flaps preferably extend perpendicular to the bottom wall, the insertion of the box in the hole is enhanced, but the manufacturing of the box is facilitated as well.

When placing the box in a hole of a wall, the engagement edges when engaging the surface of the - soft (gypsum, so-called Gibo® walls) - wall of the hole, will be able to cut into the material as a result of which a reliable anchoring of the box in the hole is created. Should they not be able to cut in, they will still be able to deform, as described above. The placement protrusions have a preferred direction when bending away in case of contact with the surface of the wall of the hole.

Preferably the placement flaps extend from the outer surface of the circumferential wall at a constant angle between the location of the connection with the circumferential wall and the engagement edge. Due to the straight shape, the quantity of material can be kept further limited.

Preferably at least some of the placement flaps are inclined in opposite directions with respect to the related tangent planes, as a result of which the box is locked against rotation in circumferential direction. Said locking is enhanced when pairs of placement flaps with opposite inclined extension are provided on the circumferential wall. Their effectiveness is increased when the placement flaps of each pair face away from each other.

The placement flaps thus extending opposite and inclined preferably include an angle of approximately 90 degrees for an optimal two-sided effect.

In one embodiment the box has a curved round-going, preferably circular, circumferential wall. Preferably the engagement edges in the unplaced condition of the box are situated at a largest circumscribed circle of the box.

The insertion of the box into the hole is enhanced when the placement flaps have an engagement edge that extends perpendicular to the bottom wall.

Preferably a box for electric wirings, to be placed in a hole in a wall of a building comprises a bottom wall and a circumferential wall, which define an inner space for accommodating switch and/or connection means for the electric wiring, wherein at its outer surface the circumferential wall is provided with placement protrusions facing away from the circumferential wall and formed as one unity with the box, which placement protrusions are provided with an engagement edge for engagement of the bounding wall of the hole, wherein the placement protrusions form placement flaps extending with a directional component transverse to the bottom wall, wherein the placement protrusions are bendable in circumferential direction of the box wall.

The insertion into the hole and initiating the bending around of the placement flaps in all the said embodiments is further enhanced when the placement flaps near the bottom wall are provided with an inclined edge extending towards the circumferential wall and/or bottom wall.

Initiating the bending around of the placement flaps is further enhanced when the placement flaps narrow down in the direction towards the bottom wall.

In an easy-to-produce embodiment the placement flaps are formed as one unity with the circumferential wall.

Preferably the placement protrusions are elastically deformable.

It is remarked that from European patent application 0.780.945 a box for electric wirings is known, in which the circumferential wall is provided with slots for accommodating slides by sliding, which slides have been provided with a series of overlapping, elastic lips, that protrude obliquely in axial and in circumferential direction.

The aspects and measures described and/or shown in the application may where possible also be used individually. Said individual aspects and other aspects may be the subject of divisional patent applications related thereto.

The invention will be elucidated on the basis of a number of exemplary embodiments shown in the attached drawings, in which:
Figure 1 shows a view diagonally from above of an exemplary embodiment of a box according to the invention;
Figure 2 shows a side view of the box of figure 1;
Figure 3 shows a top view of the box of figure 1, prior to placement in a hole in a wall; and
Figure 4 shows the box of figure 1, after placement in a hole in a wall.

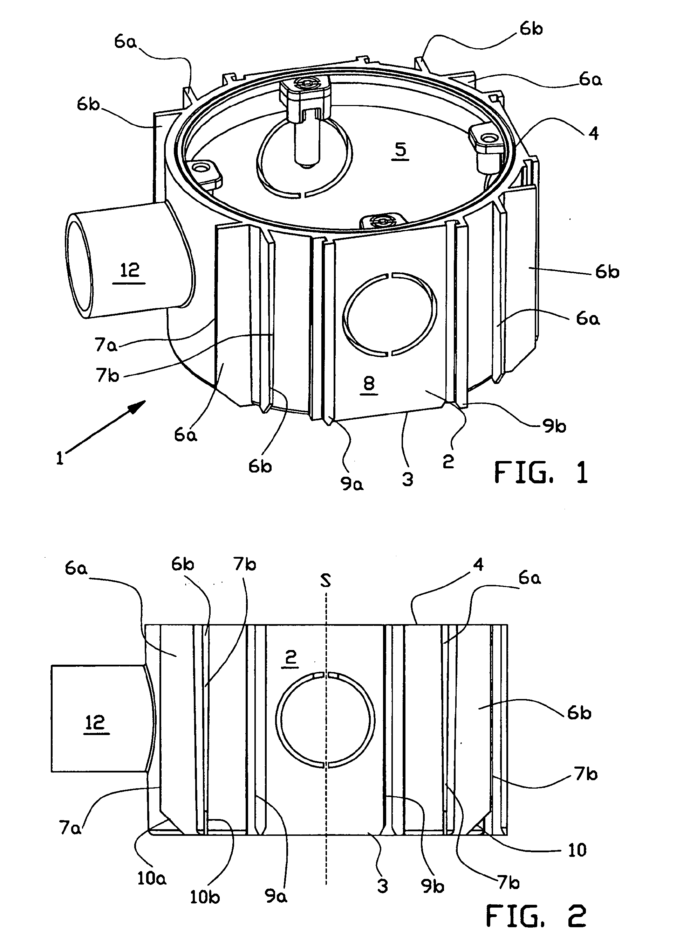

The box 1 of figure 1 is designed like a flush-type box, made from synthetic material, for instance polypropylene, and comprises a substantially circular circumferential wall 2 having centre line S and a bottom 3. At the side facing away from the bottom 3, the circumferential wall 2 has a circumferential edge 4 leaving an access opening free to the inside 5 of the box 1.

In a manner known per se a spout 12 extends from the circumferential wall 2, for connection to a wiring pipe.

At positions that are spaced apart 90 degrees from each other the circumferential wall 2 is furthermore provided with coupling surfaces 8, in which a passage is provided which can be broken out, and which is provided with coupling rails 9a, 9b, for coupling to another substantially similar flush-type box.

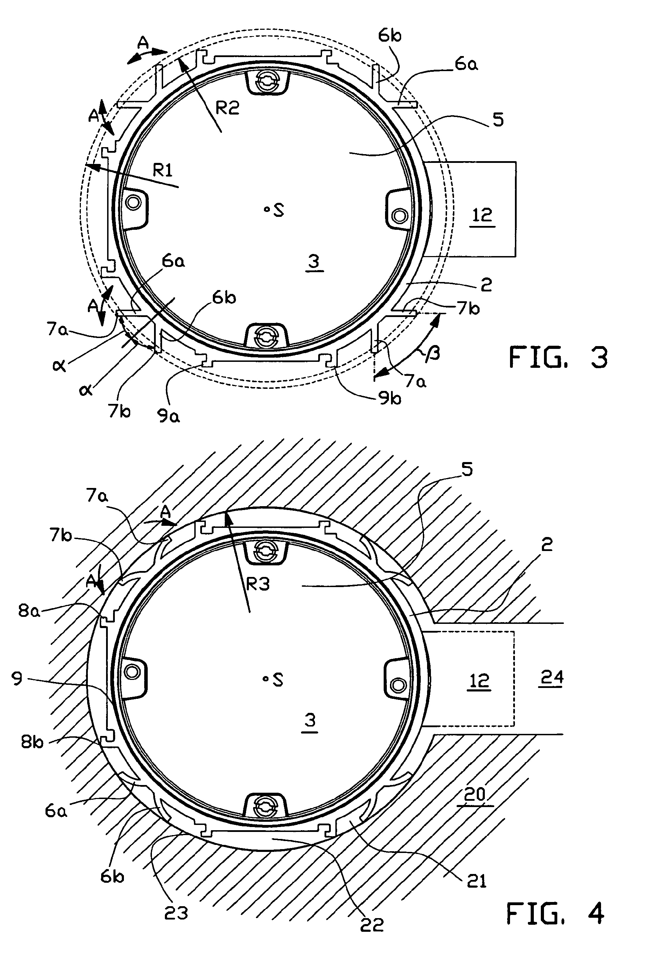

At four positions that also differ 90 degrees from each other, there are pairs of bending flaps 6a, 6b that are integrally formed with the circumferential wall 2, and extend up to the bottom wall 3 and with respect to the radial (see figure 3) extend at angles α of 45 degrees, and as a result are at an angle β of 90 degrees to each other. The flaps 6a, 6b have been made/formed to be bent in directions A (figure 3), about centre line parallel to the centre line S of the box 1.

In figures 1 and 2 it can furthermore be seen that the vertical edges 7a, 7b of the bending flaps 6a, 6b narrow down in the direction towards the box bottom 3, wherein the same applies to the thickness of the bending flaps 6a, 6b.

In figure 3 it is furthermore indicated that the circumscribed circle of the coupling rails 9a, 9b has a radius R2, which is smaller than the radius R1 of the circumscribed circle of the vertical edges 7a, 7b of the bending flaps 6a, 6b.

In figures 1 and 2 it is further indicated that the ends of the bending flaps 6a, 6b that face the bottom, have been provided with bevelled edges 10a, 10b.

In figure 4 a wall 20 is shown made of hard material, such as concrete or sandlime bricks, in which a hole 21 has been made, which has a bottom 22 and a circular circumferential wall 23. From the hole 21 a slot 24 extends for a wiring pipe.

The radius R3 of the hole 21 is larger than or equal to radius R2, yet smaller than the radius R1.

When inserting the flush-type box, having the bottom 3 facing the hole 21, first the inclined edges 10a, 10b will contact the upper edge of the circumferential wall 23. In the lowermost area of the bending flaps 6a, 6b said flaps are easy to deform sideward, so that bending flaps 6a, 6b in case of hard wall material will be bent aside in the directions A due to the influence of the presence of the circumferential wall 23 and the upper edge thereof. When further inserting the box into the hole 21 the following parts of the bending flaps 6a, 6b are smoothly subjected to the bending, so that finally the situation shown in figure 4 is achieved, in which the bending flaps have been bent in pairs, oppositely, in the direction A. The bending flaps 6a, 6b engage with the longitudinal edges 7a, 7b onto the circumferential wall 23 in order to retain the box 1 both in position in circumferential direction and to stop the box from retracting from the hole 21. The inclined position of the bending flaps 6a, 6b with respect to the radial enhances the bending process.

In case the wall is made of soft material, particularly gypsum, the bending flaps can be suitable for cutting into the wall material with the edges 10a,b.

## Claims

1. Box (1) for electric wirings, to be placed in a hole in a wall of a building, comprising a bottom wall (3) and a circumferential wall (2), which define an inner space (5) for accommodating switch and/or connection means for the electric wiring, wherein at its outer surface the circumferential wall is provided with placement protrusions (6a, 6b) facing away from the circumferential wall and forming one unity therewith, which placement protrusions are provided with an engagement edge (7a, 7b) for engagement of the bounding wall of the hole, wherein the placement protrusions are bendable in circumferential direction of the box wall and wherein the placement protrusions project from the outer surface of the circumferential wall at an oblique angle to the tangent plane at the outer surface at that location, **characterized in that** the placement protrusions form placement flaps (6a, 6b) extending with a directional component transverse to the bottom wall, preferably perpendicular to the bottom wall.

2. Box according to claim 1, wherein the placement flaps (6a, 6b) extend from the outer surface of the circumferential wall (2) at a constant angle between the location of the connection with the circumferential wall and the engagement edge (7a, 7b).

3. Box according to claim 1 or 2, wherein at least some of the placement flaps (6a, 6b) are inclined in opposite directions with respect to the related tangent planes.

4. Box according to claim 3, wherein pairs of placement flaps (6a, 6b) with opposite inclined extension are provided on the circumferential wall (2).

5. Box according to claim 4, wherein the placement flaps (6a, 6b) of each pair face away from each other.

6. Box according to claim 4 or 5, wherein the placement flaps (6a, 6b) that extend opposite and inclined include and angle of approximately 90 degrees.

7. Box according to any one of the preceding claims, wherein the box (1) has a curved round-going, preferably circular, circumferential wall (2), wherein the engagement edges (7a, 7b) in the unplaced condition of the box preferably are situated at a largest circumscribed circle of the box.

8. Box (1) for electric wirings according to any one of the preceding claims, to be placed in a hole in a wall of a building comprising a bottom wall (3) and a circumferential wall (2), which define an inner space for accommodating switch and/or connection means for the electric wiring, wherein at its outer surface the circumferential wall is provided with placement protrusions facing away from the circumferential wall and formed as one unity, with the box, which placement protrusions are provided with an engagement edge (7a, 7b) for engagement of the bounding wall of the hole, wherein the placement protrusions form placement flaps (6a, 6b) extending with a directional component transverse to the bottom wall (3), wherein the placement protrusions are bendable in circumferential direction of the box wall.

9. Box according to claim 8, wherein the placement flaps (6a, 6b) extend perpendicular to the bottom wall.

10. Box according to any one of the preceding claims, wherein the placement flaps (6a, 6b) have an engagement edge that extends perpendicular to the bottom wall.

11. Box according to any one of the preceding claims, wherein the placement flaps (6a, 6b) near the bottom wall are provided with an inclined edge extending towards the circumferential wall and/or bottom wall.

12. Box according to any one of the preceding claims, wherein the placement flaps (6a, 6b) narrow down in the direction towards the bottom wall.

13. Box according to any one of the preceding claims, wherein the placement flaps (6a, 6b) are formed as one unity with the circumferential wall.

14. Box according to any one of the preceding claims, wherein the placement flaps (6a, 6b) are elastically deformable.

## Patentansprüche

1. Dose (1) für Elektroinstallationen, zum Versetzen in einem Loch in einer Wand eines Gebäudes, umfassend eine Bodenwand (3) und eine Umfangswand (2), welche einen inneren Raum (5) zum Aufnehmen eines Schalter und/oder von Verbindungsmitteln für eine Elektroinstallation definieren, wobei die Umfangswand an ihrer äußeren Oberfläche mit Anordnungsvorsprüngen (6a, 6b) ausgestattet ist, welche weg von der Umfangswand weisen und eine Einheit mit dieser bilden, wobei die Anordnungsvorsprünge mit einer Eingriffskante (7a, 7b) zum Eingriff mit der begrenzenden Wand des Loches ausgestattet sind, wobei die Anordnungsvorsprünge in die Umfangsrichtung der Dosenwand biegbar sind und wobei die Anordnungsvorsprünge von der äußeren Oberfläche der Umfangswand in einem schrägen Winkel zu der Tangentialebene der äußeren Oberfläche an jener Stelle vorragen, **dadurch gekennzeichnet, dass** die Anordnungsvorsprünge Anordnungsflügel (6a, 6b) ausbilden, welche sich in eine Richtungskomponente quer zur Bodenwand erstrecken, vorzugsweise senkrecht zur Bodenwand.

2. Dose nach Anspruch 1, wobei die Anordnungsflügel (6a, 6b) sich von der äußeren Oberfläche der Umfangswand (2) mit einem konstanten Winkel zwischen der Stelle der Verbindung mit der Umfangswand und der Eingriffskante (7a, 7b) erstrecken.

3. Dose nach Anspruch 1 oder 2, wobei wenigstens einige der Anordnungsflügel (6a, 6b) in die entgegengesetzten Richtungen in Bezug auf die betroffenen Tangentialebenen geneigt sind.

4. Dose nach Anspruch 3, wobei die Paare der Anordnungsflügel (6a, 6b) mit entgegengesetzt geneigter Ausdehnung auf der Umfangswand (2) vorgesehen sind.

5. Dose nach Anspruch 4, wobei die Anordnungsflügel (6a, 6b) jedes Paares von einander weg weisen.

6. Dose nach Anspruch 4 oder 5, wobei die Anordnungsflügel (6a, 6b), welche sich entgegengesetzt erstrecken und geneigt sind, einen Winkel von ungefähr 90 Grad umschließen.

7. Dose nach jedem der vorangehenden Ansprüche, wobei die Dose (1) eine gebogene, in der Runde verlaufende, vorzugsweise kreisrunde Umfangswand (2) aufweist, wobei die Eingriffskanten (7a, 7b) im nicht eingesetzten Zustand der Dose vorzugsweise am größten umschriebenen Kreis der Dose angeordnet sind.

8. Dose (1) für Elektroinstallationen nach jedem der vorangehenden Ansprüche, zum Versetzen in einem Loch in einer Wand eines Gebäudes, umfassend eine Bodenwand (3) und eine Umfangswand (2), welche einen inneren Raum zum Aufnehmen eines Schalter und/oder von Verbindungsmitteln für die Elektroinstallation definieren, wobei die Umfangswand an ihrer äußeren Oberfläche mit Anordnungsvorsprüngen ausgestattet ist, welche weg von der Umfangswand weisen und als eine Einheit mit der Dose ausgebildet sind, wobei die Anordnungsvorsprünge mit einer Eingriffskante (7a, 7b) zum Eingriff mit der begrenzenden Wand des Loches ausgestattet sind, wobei die Anordnungsvorsprünge Anordnungsflügel (6a, 6b) ausbilden, welche sich in eine Richtungskomponente quer zur Bodenwand (3) erstrecken, wobei die Anordnungsvorsprünge biegbar in Umfangsrichtung der Dosenwand sind.

9. Dose nach Anspruch 8, wobei die Anordnungsvorsprünge (6a, 6b) sich senkrecht zur Bodenwand erstrecken.

10. Dose nach jedem der vorangehenden Ansprüche, wobei die Anordnungsvorsprünge (6a, 6b) eine Eingriffskante aufweisen, welche sich senkrecht zur Bodenwand erstreckt.

11. Dose nach jedem der vorangehenden Ansprüche, wobei die Anordnungsvorsprünge (6a, 6b) nahe der Bodenwand mit einer geneigten Kante ausgestattet sind, welche sich in Richtung der Umfangswand und/oder der Bodenwand erstreckt.

12. Dose nach jedem der vorangehenden Ansprüche, wobei die Anordnungsvorsprünge (6a, 6b) sich in die Richtung zur Bodenwand hin verengen.

13. Dose nach jedem der vorangehenden Ansprüche, wobei die Anordnungsvorsprünge (6a, 6b) als eine Einheit mit der Umfangswand ausgebildet sind.

14. Dose nach jedem der vorangehenden Ansprüche, wobei die Anordnungsvorsprünge (6a, 6b) elastisch verformbar sind.

## Revendications

1. Boîte (1) pour câbles électriques, destinée à être placée dans un trou dans un mur d'un bâtiment, comprenant une paroi inférieure (3) et une paroi circonférentielle (2), qui définit un espace interne (5) pour accueillir un interrupteur et/ou un moyen de connexion pour le câble électrique, où au niveau de sa surface externe la paroi circonférentielle est pourvue de protubérances d'insertion (6a, 6b) disposées dos à dos par rapport à la paroi circonférentielle et formant une unité avec elle, les dites protubérances d'insertion étant équipées d'un bord d'engagement (7a, 7b) pour l'engagement de la paroi de liaison du trou, où les protubérances d'insertion peuvent être courbées dans la direction circonférentielle de la paroi de la boîte et où protubérances d'insertion dépassent de la surface externe de la paroi circonférentielle à un angle oblique au plan tangent à la surface externe à cet endroit, **caractérisée en ce que** les protubérances d'insertion forment des rabats d'insertion (6a, 6b) s'étendant avec un composant directionnel transverse à la paroi du fond, de préférence perpendiculaire à la paroi du fond.

2. Boîte selon la revendication 1, **caractérisée en ce que** les rabats d'insertion (6a, 6b) s'étendent à partir de la surface externe de la paroi circonférentielle (2) à un angle constant entre le lieu de la connexion entre la paroi circonférentielle et le bord d'engagement (7a, 7b).

3. Boîte selon la revendication 1 ou 2, **caractérisée en ce qu'**au moins une partie des rabats d'insertion (6a, 6b) sont inclinés dans des directions opposées par rapport aux plans tangents concernés.

4. Boîte selon la revendication 3, **caractérisée en ce que** des paires de rabats d'insertion (6a, 6b) sont prévues avec une extension inclinée opposée sur la paroi circonférentielle (2).

5. Boîte selon la revendication 4, **caractérisée en ce que** les rabats d'insertion (6a, 6b) de chaque paire sont tournés dos à dos l'un par rapport à l'autre.

6. Boîte selon la revendication 4 ou 5, **caractérisée en ce que** les rabats d'insertion (6a, 6b) qui s'étendent à l'opposé et sont inclinés forment un angle d'environ 90 degrés.

7. Boîte selon l'une quelconque des revendications précédentes, **caractérisée en ce que** la boîte (1) a une paroi circonférentielle courbe, arrondie de préférence circulaire (2), où les bords d'engagement (7a, 7b) dans l'état non placé de la boîte sont situés de préférence au niveau d'un cercle circonscrit supérieur à la boîte.

8. Boîte (1) pour câble électrique selon l'une quelconque des revendications précédentes, destinée à être placée dans un trou dans un mur d'un bâtiment comprenant une paroi de fond (3) et une paroi circonférentielle (2), qui définissent une espace interne pour accueillir un interrupteur et/ou un moyen de connexion pour le câble électrique, où au niveau de sa surface externe la paroi circonférentielle est équipée de protubérances d'insertion tournant le dos à la paroi circonférentielle et formées comme une unité, avec la boîte, lesquelles protubérances d'insertion sont équipées d'un bord d'engagement (7a, 7b) pour engager la paroi de liaison du trou, où les protubérances d'insertion forment des rabats d'insertion (6a, 6b) s'étendant avec un composant directionnel transverse à la paroi de fond (3), où les protubérances d'insertion peuvent être courbées dans la direction circonférentielle de la paroi de la boîte.

9. Boîte selon la revendication 8, **caractérisée en ce que** les rabats d'insertion (6a, 6b) s'étendent perpendiculairement à la paroi de fond.

10. Boîte selon l'une quelconque des revendications précédentes, **caractérisée en ce que** les rabats d'insertion (6a, 6b) ont un bord d'engagement qui s'étend perpendiculairement à la paroi de fond.

11. Boîte selon l'une quelconque des revendications précédentes, **caractérisée en ce que** les rabats d'insertion (6a, 6b) à proximité de la paroi de fond sont prévus avec un bord incliné s'étendant vers la paroi circonférentielle et/ou la paroi du fond.

12. Boîte selon l'une quelconque des revendications précédentes, **caractérisée en ce que** les rabats d'insertion (6a, 6b) deviennent plus étroits dans la direction vers la paroi du fond.

13. Boîte selon l'une quelconque des revendications précédentes, **caractérisée en ce que** les rabats d'insertion (6a, 6b) sont formés comme une unité avec la paroi circonférentielle.

14. Boîte selon l'une quelconque des revendications précédentes, **caractérisée en ce que** les rabats d'insertion (6a, 6b) sont élastiquement déformables.
